# EUROPÄISCHE PATENTSCHRIFT

(11) **EP 3 956 562 B1**
(45) Veröffentlichungstag und Bekanntmachung des Hinweises auf die Patenterteilung: **17.06.2026**
(21) Anmeldenummer: 20718626.3
(22) Anmeldetag: 08.04.2020
(51) Int. Cl.: F03D 17/00, F03D 80/55

(54) **VERFAHREN ZUM BESTIMMEN VON BETRIEBSDATEN EINER WINDENERGIEANLAGE**
METHOD FOR DETERMINING OPERATING DATA OF A WIND TURBINE
PROCÉDÉ DE DÉTERMINATION DE DONNÉES DE FONCTIONNEMENT D'UN AÉROGÉNÉRATEUR

(30) Priorität: 15.04.2019 DE 102019109908
(43) Veröffentlichungstag der Anmeldung: 23.02.2022
(73) Patentinhaber: Wobben Properties GmbH, 26607 Aurich (DE)
(72) Erfinder: KUHNKE, Chris, 26603 Aurich (DE); LEBOSQ, Rodolphe, 26603 Aurich (DE)
(74) Vertreter: Eisenführ Speiser
(86) Internationale Anmeldenummer: PCT/EP2020/059967
(87) Internationale Veröffentlichungsnummer: WO 2020/212213

(56) Entgegenhaltungen:
- EP-A1- 2 374 010
- EP-B1- 2 374 010
- WO-A1-2017/158479
- WO-A1-2018/149533
- DE-A1- 102012 020 054
- DE-A1- 102013 110 898
- DE-B4- 102013 110 898

## Beschreibung

Die Erfindung betrifft den Bereich von Windenergieanlagen und hierbei insbesondere das Bestimmen von Betriebsdaten einer Windenergieanlage.

Es ist allgemein bekannt, dass bei der Entwicklung elektrischer Anlagen, wie beispielsweise Windenergieanlagen, Simulationen zur Optimierung eines Designs, insbesondere im Hinblick auf zu erbringende Betriebsdaten von Betriebsparametern, wie beispielsweise eine erzeugbare elektrische Energiemenge, ausgeführt werden. Das Design wird auch unter Berücksichtigung weiterer Bedingungen, wie beispielsweise einer konstruktiv ausführbaren Realisierung oder Kostenoptimierung zu einem serienreifen Modell weiterentwickelt.

Die zuvor nur simulierten Betriebsparameter zum Erhalten erwarteter Betriebsdaten werden dann anhand des umgesetzten Serienmodells verifiziert und gegebenenfalls die zu erwartende Betriebsdaten angepasst. Erwartete Betriebsdaten werden beispielsweise auf Testständen oder im Feld verifiziert, um so eine besonders zuverlässige Aussage beispielsweise für Kunden über zu erwartende Betriebsdaten bei unterschiedlichen Betriebseinsätzen unter unterschiedlichen Bedingungen voraussagen zu können.

Demnach umfassen die so ermittelten Betriebsdaten beispielsweise zuverlässige zu erwartende Leistungsdaten einer Windenergieanlage, also insbesondere eine von den Umweltbedingungen, wie der Windgeschwindigkeit und Windrichtung, abhängige Menge einer elektrischen Leistung, die durch die Windenergieanlage aus der Windenergie erzeugbar ist. Diese werden für jeden Windenergieanlagentyp beispielsweise in Form von Leistungskurven vorgegeben, um in Abhängigkeit von den vorherrschenden Windbedingungen an einem Aufstellungsort einen geeigneten Windenergieanlagentyp zu identifizieren. Leistungskurven geben hierbei etwa eine üblicherweise zu erwartende elektrische Leistung bei unterschiedlichen Windgeschwindigkeiten an.

Weiter werden später zur Abnahme einer Windenergieanlage, aber auch zur Überprüfung der Funktion einer Windenergieanlage, regelmäßig Vermessungen der Windenergieanlage durchgeführt, um eine Betriebserlaubnis einer Windenergieanlage zu erhalten oder aufrechtzuerhalten. Derartige Vermessungen können auch zur reinen Information über den Zustand der Windenergieanlage dienen.

Bei derartigen Vermessungen wird häufig festgestellt, dass die tatsächlich gemessenen Betriebsdaten nicht mit den zuvor bestimmten erwarteten Betriebsdaten, beispielsweise festgelegten Leistungskurven, übereinstimmen, was auf eine Vielzahl von Faktoren zurückzuführen ist. Daher ist es wünschenswert zu erfassen, warum eine derartige Differenz zwischen prognostizierten und realen Betriebsdaten besteht und entsprechende Gründe oder Einflussfaktoren und deren Anteil an der Differenz zu kennen. Vorzugsweise sind bestimmte Einflussfaktoren, denen nach Identifizierung nicht unmittelbar entgegengewirkt werden kann, in den Messergebnissen der Vermessung zu eliminieren, um so eine mögliche Restdifferenz zwischen prognostizierten und realen Betriebsdaten zu extrahieren. So kann aufgrund einer verbleibenden Differenz zwischen gemessenen Betriebsdaten und den zuvor bestimmten erwarteten Betriebsdaten auf behebbare Einflussfaktoren, wie beispielsweise Einstellungsfehler, geschlossen werden.

In der prioritätsbegründenden deutschen Patentanmeldung hat das Deutsche Patent- und Markenamt die folgenden Dokumente recherchiert: DE 10 2013 110 898 B4, DE 10 2012 020 054 A1, DE 20 2013 007 142 U1 und DE 11 2012 005 771 T5. Ferner zeigen die Dokumente WO 2018/149533 A1 und EP 2 374 010 B1 Vermessungen einer Windenergieanlage, wobei hierfür an den Rotorblättern angeordnete Sensoren verwendet werden. Solche Sensoren werden für eine Leistungsvermessung am Rotorblatt angebracht und verändern die Aerodynamik durch aufgeklebte Kabel und die aufgeklebten Sensoren selbst. Elektrische Teile dieser Sensoren können auch zu Schäden durch elektrische Entladungen, wie Blitzschlag, führen.

Aufgabe der vorliegenden Erfindung ist es daher, Betriebsdaten einer Windenergieanlage unter realen Bedingungen möglichst genau zu erfassen und Differenzen zu prognostizierten Betriebsdaten besser klassifizieren zu können.

Die Erfindung schlägt daher ein Verfahren nach Anspruch 1 vor. Demnach umfasst die Erfindung das Bestimmen von Betriebsdaten einer Windenergieanlage. Hierbei werden kontinuierlich oder periodisch Betriebsdaten zu Messzeitpunkten in einem Messzeitraum gemessen. Weiter wird der Verschmutzungsgrad mindestens eines festgelegten Bereichs einer Oberfläche mindestens eines Rotorblatts der Windenergieanlage jeweils in mehreren nacheinander folgenden Detektionszeitpunkten im Messzeitraum detektiert. Weiter werden die gemessenen Betriebsdaten mit dem detektierten Verschmutzungsgrad bewertet.

Hierbei liegt der Erfindung die Erkenntnis zugrunde, dass Betriebsdaten einer Windenergieanlage abhängig von dem Verschmutzungsgrad der Rotorblätter sind. Werden somit gemessene Betriebsdaten mit einem detektierten Verschmutzungsgrad bewertet, so kann bestimmt werden, wie groß der Anteil eines Abweichens oder einer Differenz der gemessenen Betriebsdaten von idealen oder prognostizierten Betriebsdaten ist, der von einer Verschmutzung abhängig ist. Insbesondere kann hierdurch der verschmutzungsabhängige Anteil einer Abweichung eliminiert werden und im Falle, dass weiterhin eine Abweichung besteht, die Abweichungsursache, ohne Berücksichtigung des Verschmutzungsgrades, untersucht werden. Insbesondere bei einer ansonsten im Wesentlichen ideal funktionierenden Windenergieanlage kann so erreicht werden, dass die gemessenen Betriebsdaten, bereinigt durch eine durch die Verschmutzung verursachte Differenz, im Wesentlichen mit den vorbestimmten Betriebsdaten übereinstimmen und so die korrekte Funktionsweise belegt werden kann.

Gemäß einer ersten Ausführungsform erfolgt die Bewertung der Betriebsdaten, indem ein Messwert mit dem Verschmutzungsgrad des Detektionszeitpunktes bewertet wird, der zeitlich am nächsten zum Messzeitpunkt des zu bewertenden Messwerts liegt. Hierbei wird der Möglichkeit Sorge getragen, dass besonders bevorzugt der Verschmutzungsgrad nicht mit der gleichen Frequenz wie das Messen der Betriebsdaten erfolgen muss, sondern es genügt, weniger Detektionszeitpunkte zur Detektion des Verschmutzungsgrads im Messzeitraum vorzusehen als Messzeitpunkte zum Messen der Betriebsdaten. Hierin schlägt sich die Erkenntnis nieder, dass sich der Verschmutzungsgrad eines Rotorblatts nur langsam ändert, insbesondere dann, wenn längere Schwachwindphasen an trockenen Tagen aufgetreten und daher beispielsweise Staub und Insekten auf den Rotorblättern abgelagert sind. Lediglich wenn auf die genannten Schwachwindphasen an trockenen Tage stärkerer Wind und Regen folgt, ändert sich der Verschmutzungsgrad geringfügig schneller. Dennoch ändert sich der Verschmutzungsgrad im Vergleich mit den Betriebsdaten, die beispielsweise in Sekundenintervallen oder noch häufiger aufgenommen werden, nur sehr langsam und es genügt diesen in einem größeren Zeitintervall zu detektieren.

Gemäß einer weiteren Ausführungsform wird der Verschmutzungsgrad durch Bestimmen einer Anzahl von Umschlagpunkten oder Umschlagbereichen der Luftströmung im festgelegten Bereich detektiert. Die Umschlagpunkte beziehen sich auf Umschlagpunkte der Strömung von einer laminaren Strömung in eine turbulente Strömung. Die Umschlagpunkte werden auch Transitionspunkte genannt.

Das heißt, für den festgelegten Bereich werden Schwellenwerte, beispielsweise im einfachsten Fall eine bestimmte Anzahl von Umschlagpunkten oder Umschlagbereichen festgelegt. Daraufhin wird im festgelegten Bereich ein vergleichsweise geringerer Verschmutzungsgrad dann detektiert, wenn weniger Umschlagpunkte oder Umschlagbereiche detektiert werden, als durch den Schwellenwert festgelegt ist. Ein vergleichsweise höherer Verschmutzungsgrad wird detektiert, wenn der Schwellenwert überschritten wird. Es können auch mehrere Schwellenwerte vorgesehen sein, sodass eine Vielzahl von Verschmutzungsgraden, die proportional zu der Anzahl der Umschlagpunkte oder Umschlagbereiche definiert sind, detektierbar sind. Auf einfache Art und Weise kann so der Verschmutzungsgrad durch einfaches Zählen der Umschlagpunkte bestimmt werden.

Erfindungsgemäß erfolgt die Detektion des Verschmutzungsgrads, indem mindestens ein Infrarotbild des festgelegten Bereichs mit mindestens einer Wärmebildkamera in einem Detektionszeitpunkt aufgenommen wird. Insbesondere erfolgt so auch die Detektion des Verschmutzungsgrads, insbesondere der Umschlagpunkte oder Umschlagbereiche, da diese auf einem Wärmebild, das im Folgenden synonym auch als Infrarotbild bezeichnet wird, sichtbar sind, also sich von anderen Bereichen im Bild unterscheiden. Demnach ist mit einer Wärmebildkamera, insbesondere mit einer Bilderkennungssoftware, beispielsweise ein Umschlagpunkt in einem Infrarotbild detektierbar, sodass insbesondere durch Bildauswertung des Infrarotbilds auch eine Anzahl der Umschlagpunkte oder Umschlagbereiche detektierbar ist. In einfacher Art und Weise ist somit ein Verschmutzungsgrad anhand eines Infrarotbilds mit einer Wärmebildkamera, insbesondere automatisch, bestimmbar.

Gemäß einer weiteren Ausführungsform ist die Wärmebildkamera vor oder hinter der Windenergieanlage mit der Windenergieanlage zusammen auf einer Geraden parallel zur Hauptwindrichtung platziert oder es werden mehrere Wärmebildkameras vor oder hinter der Windenergieanlage symmetrisch zu einer Geraden, die parallel zur Hauptwindrichtung ist, platziert. Die Hauptwindrichtung an einem Standort einer Windenergieanlage ist festgelegt und bezeichnet die Windrichtung, aus der der Wind am Standort in der überwiegenden Zeit auf die Windenergieanlage trifft. Vor der Windenergieanlage bezeichnet eine Position oder Richtung mit Blick auf die Druckseite der Rotorblätter und hinter der Windenergieanlage bezeichnet eine Position oder Richtung mit Blick auf die Saugseite der Rotorblätter. Hierbei wird ausgenutzt, dass eine Windenergieanlage vorwiegend in ihre Hauptwindrichtung ausgerichtet ist und somit Wärmebildkameras oder eine Wärmebildkamera in der überwiegenden Zeit Infrarotbilder aufnehmen kann, sodass die Detektion eines Verschmutzungsgrads im Wesentlichen zu jedem Zeitpunkt bestimmbar ist.

Gemäß einer weiteren Ausführungsform wird die Wärmebildkamera unbeweglich platziert. Zur Detektion eines Verschmutzungsgrads des festgelegten Bereichs werden mehrere Bilder in einem zeitlichen Abstand von weniger als einer Sekunde zueinander aufgenommen. Wenigstens eines der Bilder, das den mindestens einen festgelegten Bereich zeigt, wird dann bestimmt oder erkannt. Ein Detektionszeitpunkt wird dann in Abhängigkeit von dem Zeitpunkt festgelegt, an dem das bestimmte Bild aufgenommen wurde. Der dem Detektionszeitpunkt zugeordnete Verschmutzungsgrad wird weiter anhand des bestimmten Bilds bestimmt. Somit kann mittels Bilderkennungssoftware zunächst der festgelegte Bereich in einem der Bilder detektiert werden, wobei hier berücksichtigt wird, dass sich das Rotorblatt dreht und daher der festgelegte Bereich in einem oder mehreren Bildern aufgrund der Rotationsbewegung auftritt. Eines der Bilder, das jedenfalls den festgelegten Bereich zeigt, wird dann bestimmt und der Verschmutzungsgrad anhand dieses bestimmten Bilds detektiert bzw. bestimmt. Gleichzeitig wird der Aufnahmezeitpunkt dieses Bilds als Detektionszeitpunkt festgelegt. Somit kann auf eine Synchronisation der Rotorstellung zwischen Windenergieanlage und Wärmebildkamera verzichtet und die Detektion des Verschmutzungsgrads unabhängig ausgeführt werden.

Das Festlegen des Detektionszeitpunkts für das bestimmte Bild, mit dem der Verschmutzungsgrad bestimmt wird, dient, um einen Verschmutzungsgrad mit dem entsprechenden Detektionszeitpunkt auch abzuspeichern. So können zur Bewertung der gemessenen Betriebsdaten, die beispielsweise in einer Windenergieanlage separat gespeichert werden, die gemessenen Betriebsdaten zu einem späteren Zeitpunkt mit den detektierten Verschmutzungsgraden anhand der gespeicherten Detektionszeitpunkte zusammengeführt werden, um die Bewertung der Betriebsdaten erst nach Ablauf des Messzeitraums auszuführen.

Gemäß einer weiteren Ausführungsform umfasst die Vorrichtung einen Sensor oder eine Sensorik, um eine Sollposition des den festgelegten Bereich umfassenden Rotorblatts zu detektieren, um eine Aufnahme auszulösen und so den Detektionszeitpunkt festzulegen. Gemäß einer weiteren Ausführungsform werden die Betriebsdaten als Leistungsvermessungswerte bei einer Leistungsvermessung gemessen. Das heißt, Betriebsdaten entsprechen Leistungsvermessungswerten der Windenergieanlage, die auch einfach Leistungswerte genannte werden können, nämlich vorzugsweise der erzeugen elektrischen Energie. Alternativ werden die Betriebsdaten als Schallvermessungswerte bei einer Schallvermessung gemessen. Die Betriebsdaten entsprechen demnach Werten einer Schallabstrahlung der Windenergieanlage, wie etwa Schalldruckpegeln. Weiter können die Betriebsdaten gemäß einer weiteren Alternative Lastvermessungswerte bei einer Lastvermessung sein. Neben diesen Werten, die den kontinuierlich oder periodisch gemessenen Betriebsdaten entsprechen, werden gemäß einer weiteren besonderen Ausführungsform auch weitere Werte zum momentanen Zustand der Windenergieanlage, beispielsweise die Azimutausrichtung der Gondel der Windenergieanlage, die Stellung der Rotorblätter, Windrichtung und Windgeschwindigkeit sowie Werte weiterer Parameter zusammen mit den bewerteten Betriebsdaten nach dem Messen abgelegt. So kann der genaue Zustand der Windenergieanlage, bei dem die Betriebsdaten aufgenommen wurden, bei der Auswertung nachvollzogen werden.

Erfindungsgemäß wird der Messzeitraum als ein Zeitraum festgelegt, der mehr als eine Woche, mehr als einen Monat oder mehr als sechs Monate umfasst.

Durch eine derartige Langzeitmessung lassen sich besonders bevorzugt genaue Betriebsdaten auch bei verschiedenen Tages- oder Jahreszeiten bestimmen, wobei auch die entsprechend der Tages- oder Jahreszeit häufig spezifische Verschmutzung berücksichtigt wird.

Gemäß einer weiteren Ausführungsform wird die Detektion des Verschmutzungsgrads wiederholt mindestens einmal pro Stunde oder mindestens einmal alle zwei Stunden ausgeführt. Die Detektion wird jedoch automatisch unterbrochen, wenn aufgrund des Sonnenstands sowie der Position der mindestens einen Wärmebildkamera die Gefahr der Beschädigung eines Bildsensors der Wärmebildkamera besteht. Vorzugsweise wird ein derartiger Unterbrechungszeitraum, in dem die Wiederholung der Detektion automatisch unterbrochen wird, durch Hinterlegen der Kameraausrichtung, einer Sonnenstandstabelle für den Standort oder durch Auswerten der Signale eines Lichtsensors der Wärmebildkamera oder der Windenergieanlage bestimmt. Hierdurch wird sichergestellt, dass die Detektion des Verschmutzungsgrads zwar kontinuierlich erfolgt und somit auch gemessene Betriebsdaten immer mit aktuellen detektierten Verschmutzungsgraden bewertet werden können, wobei berücksichtigt wird, dass ein Sonnenstand, der zur Beschädigung des Lichtsensors der Wärmebildkamera führen kann, die Detektion unterbricht. Eine Wärmebildkamera wird so geschützt.

Eine Vorrichtung, die zur Durchführung dieses Verfahrens geeignet ist, wird nachfolgend lediglich zur Veranschaulichung beschrieben und ist nicht Teil der beanspruchten Erfindung. Die Vorrichtung umfasst eine Wärmebildkamera und ein Gehäuse, wobei das Gehäuse eingerichtet ist, die Wärmebildkamera außerhalb einer Windenergieanlage für einen Messzeitraum von mindestens einer Woche, mindestens einem Monat oder mehr als sechs Monaten unabhängig von Wettereinflüssen zu betreiben. Demnach wird also eine Wärmebildkamera mit einem vorzugsweise wasserdichten und staubdichten Gehäuse ausgestattet, um Aufnahmen von einer Windenergieanlage, insbesondere zur Detektion des Verschmutzungsgrads, aufzunehmen.

Gemäß einer Ausführungsform der Vorrichtung umfasst das Gehäuse ein Fenster, wobei eine Linse der Wärmebildkamera auf der Innenseite des Gehäuses im Bereich des Fensters angeordnet ist, um durch einen Bereich des Fensters ein Wärmebild aufzunehmen. Zusätzlich weist das Gehäuse ferner einen Scheibenwischer zum Entfernen von Wassertropfen und/oder Verschmutzungen zumindest im Bereich des Fensters auf. Vorzugsweise umfasst die Vorrichtung eine Einheit zum Applizieren, Dosieren und/oder Lagern von Scheibenreinigerflüssigkeit für den Scheibenwischer. Infrarotbildaufnahmen sind so auch durch das Fenster im Gehäuse bei widrigen Wetterbedingungen oder insbesondere unmittelbar nach Regenschauern möglich, sodass zu gewünschten Detektionszeitpunktintervallen auch eine Detektion des Verschmutzungsgrads im Wesentlichen unabhängig von Wettereinflüssen erfolgen kann.

Gemäß einer weiteren Ausführungsform weist das Gehäuse eine Verankerung zum Verbinden des Gehäuses mit einem Untergrund und zusätzlich oder alternativ eine Diebstahlschutzeinrichtung auf. Wärmebildkameras sind in der Anschaffung sehr hochpreisig und können durch die Verankerung oder eine Diebstahlschutzeinrichtung vor Diebstahl geschützt werden. Zusätzlich kann die Verankerung dienen, um eine Kamera trotz Umwelteinflüssen, wie beispielsweise starkem Wind, fest in einer vordefinierten Position zu halten.

Gemäß einer weiteren Ausführungsform umfasst die Wärmebildkamera eine Zeit- oder Sonnenstandssteuerung und eine Blende. Die Blende ist in Abhängigkeit von der Zeit- oder Sonnenstandssteuerung öffenbar oder schließbar, um den Bildsensor der Wärmebildkamera vor Überbelichtung zu schützen. Einer Beschädigung der Wärmebildkamera durch Sonnenlicht wird so entgegengewirkt.

Gemäß einer weiteren Ausführungsform umfasst die Vorrichtung eine Klimatisierung, insbesondere mit einer Heizung, Kühlung und/oder Trocknung. Die Wärmebildkamera kann so trotz Umwelteinflüssen, wie beispielsweise Frost oder besonders hohen Temperaturen, so klimatisiert werden, dass optimale Wärmebilder mit der Wärmebildkamera aufnehmbar sind.

Gemäß einer weiteren Ausführungsform umfasst die Vorrichtung mindestens eine Datenschnittstelle, wobei die Datenschnittstelle dient, um eine Datenverbindung zwischen der Wärmebildkamera und einem Speicher herzustellen. In dem Speicher sind dann Verschmutzungsgrade mit Detektionszeitpunkten ablegbar. Alternativ oder zusätzlich ist die Datenschnittstelle eingerichtet, um eine Datenverbindung mit der Windenergieanlage oder einem Datennetzwerk herzustellen. So können der Verschmutzungsgrad, aufgenommene Infrarotbilder sowie Detektionszeitpunkte an die Windenergieanlage oder einen anderen mit dem Datennetzwerk verbundenen Teilnehmer übertragen werden. Es kann beispielsweise auch eine Synchronisation zwischen der Rotorblattstellung der Windenergieanlage sowie Aufnahmezeitpunkten mit der Wärmebildkamera erfolgen. Insbesondere ist die Datenschnittstelle eine Drahtlosschnittstelle. Eine Datenspeicherung, insbesondere der Verschmutzungsgrade und der Detektionszeitpunkte, und eine Nachverarbeitung oder Auswertung können innerhalb der Vorrichtung oder in einer separaten Einheit geschehen. Diese separate Einheit kann datentechnisch mit der Vorrichtung verbunden werden. Des Weiteren kann sich die Vorrichtung auch in einem Datennetzwerk mit einem Datenbus der Windenergieanlage und weiterer Messtechnik und Sensorik befinden. Eine derartige separate Einheit kann sich räumlich in der Windenergieanlage befinden, Teil der Windenergieanlage oder auch gänzlich räumlich unabhängig zur Windenergieanlage sein. Es ist vorstellbar, dass eine Nachverarbeitung oder Auswertung erst deutlich später an einer entfernten Position, beispielsweise in einem Büro, stattfindet und die Datenakquise hierfür über Mobilfunk vollzogen wird.

Die nachfolgend beschriebene Systemkonfiguration, bestehend aus einer Vorrichtung gemäß einer der vorgenannten Ausführungsformen und einer Windenergieanlage, dient ausschließlich der Erläuterung und ist nicht Teil der beanspruchten Erfindung.

Weitere Ausführungsformen ergeben sich anhand der in den Figuren näher erläuterten Ausführungsbeispiele. Hierbei zeigen
- Fig. 1: eine Windenergieanlage,
- Fig. 2: ein System mit einer Windenergieanlage und einer Vorrichtung und
- Fig. 3: ein Ausführungsbeispiel eines Verfahrens gemäß der Erfindung.

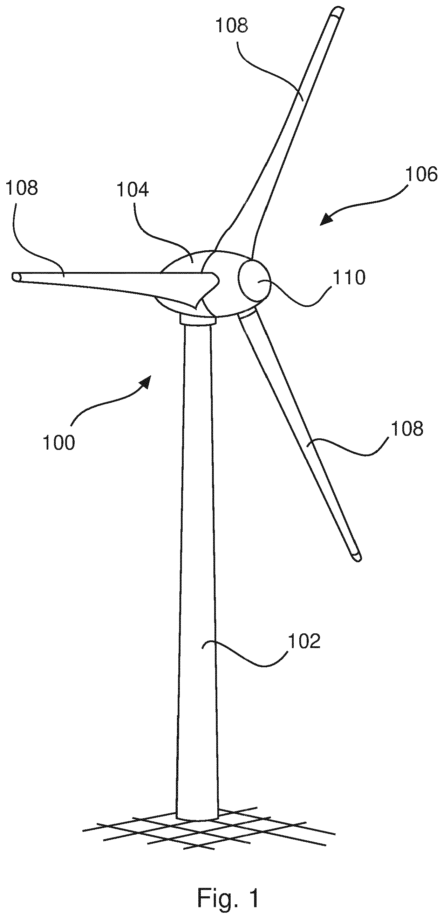

Figur 1 zeigt eine schematische Darstellung einer Windenergieanlage des erfindungsgemäßen Systems. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer des Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

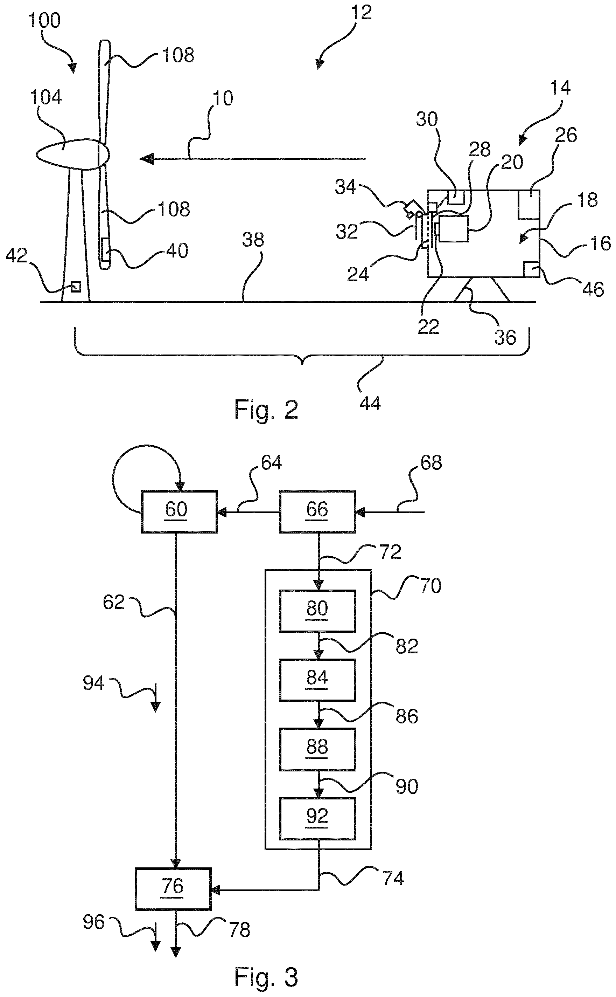

Figur 2 zeigt eine Windenergieanlage 100 in schematischer Darstellung. Die Gondel 104 der Windenergieanlage 100 ist hierbei so ausgerichtet, dass die Windenergieanlage 100 in Hauptwindrichtung 10 ausgerichtet ist. Die Hauptwindrichtung 10 beschreibt hier die Windrichtung, die am Standort 12 der Windenergieanlage üblicherweise oder zumindest in der überwiegenden Zeit vorherrscht. Vor der Windenergieanlage 100 ist eine Vorrichtung 14 aufgestellt. Die Windenergieanlage 100 und die Vorrichtung 14 sind auf einer Geraden, die im Wesentlichen parallel zur Hauptwindrichtung 10 ist, angeordnet.

Die Vorrichtung 14 umfasst ein Gehäuse 16 in einer schematischen Schnittansicht, sodass der Innenraum 18 des Gehäuses sichtbar ist. Im Innenraum 18 ist eine Wärmebildkamera 20 angeordnet, die eine Linse 22 aufweist, um durch ein Fenster 24 im Gehäuse 16 Wärmebilder der Windenergieanlage 100 aufnehmen zu können. Weiter ist im Gehäuse 18 eine Klimatisierung 26 angeordnet, um den Innenraum 18 des Gehäuses 16 in geeigneter Weise zum Betrieb der Wärmebildkamera 20 zu klimatisieren.

Das Fenster 24 ist außerdem mit einer Blende 28 versehen, die automatisiert geöffnet und geschlossen werden kann, wobei dies von einer Zeitsteuerung 30 gesteuert wird. Weiterhin weist das Fenster 24 auf der Außenseite einen Scheibenwischer 32 auf, um das Fenster 24 von Verunreinigungen zu befreien. Weiterhin ist eine Düse 34 vorgesehen, um Scheibenreinigerflüssigkeit zum Reinigen des Fensters 24 bereitzustellen. Die Vorrichtung 14 ist weiter über eine Verankerung 36 fest mit dem Boden 38 verbunden, um trotz Umwelteinflüssen in einer vordefinierten Position und Ausrichtung zur Windenergieanlage 100 zu verbleiben. Durch diese Ausrichtung ist gewährleistet, dass, solange die Windenergieanlage 100 entsprechend zur Hauptwindrichtung 10 ausgerichtet ist, ein festgelegter Bereich 40 eines Rotorblatts 108 der Windenergieanlage 100 aufgenommen werden kann. Dieser Bereich 40 entspricht vorzugsweise eine Vorderkante eines der Rotorblätter 108.

Die Stellung des Rotorblatts 108 wird von einer Steuerung 42 der Windenergieanlage kontinuierlich über Sensoren erfasst und über eine Datenleitung 44 einer Schnittstelle 46 der Wärmebildkamera zugeführt oder von der Wärmebildkamera im Bedarfsfall abgerufen. Hierdurch kann sichergestellt werden, dass die Wärmebildkamera in dem Augenblick ein Wärmebild vom festgelegten Bereich 40 des Rotorblatts 108 aufnimmt, wenn dieser im Aufnahmebereich der Kamera 20 ist. Gemäß einer hier nicht dargestellten Alternative wird durch eine Sensorik, welche mit der Vorrichtung in Einheit gebracht ist, ein Rotorblatt in Sollposition erkannt und eine Aufnahme ausgelöst.

Figur 3 zeigt die Schritte des Verfahrens gemäß einem Ausführungsbeispiel. Zunächst werden in einem Schritt 60 Betriebsdaten 62 gemessen, wobei dieser Schritt periodisch wiederholt wird und zur Festlegung der Wiederholfrequenz Messzeitpunkte 64 über einen Zeitgeber 66 vorgegeben werden. So werden Betriebsdaten 62 jeweils zu einem von mehreren Messzeitpunkten 64 aufgenommen. Insgesamt ist dem Zeitgeber 66 ein Zeitraum 68 vorgegeben, in dem die Betriebsdaten 62 zu messen sind. Weiter wird in einem Schritt 70 ein Verschmutzungsgrad des festgelegten Bereichs 40 der Windenergieanlage 100 detektiert. Hierzu ist auch der Schritt 70, der wiederholt ausgeführt wird, mit einem Zeitgeber 66 verbunden, der Detektionszeitpunkte 72 zur Detektion des Verschmutzungsgrads vorgibt. Der jeweils detektiert Verschmutzungsgrad 74 wird dann ausgegeben. In einem Bewertungsschritt 76 werden die Betriebsdaten 62 mit dem Verschmutzungsgrad 74 bewertet. Die bewerteten Betriebsdaten 78 werden ausgegeben.

Zur Detektion des Verschmutzungsgrads im Schritt 70 wird zunächst in einem Schritt 80 ein Wärmebild 82 aufgenommen und in einem Bilderkennungsschritt 84 der festgelegte Bereich 86 bestimmt. Im Schritt 88 wird dann die Anzahl von Umschlagpunkten 90 oder Umschlagbereichen bestimmt und ausgegeben. Im Schritt 92 wird dann der Verschmutzungsgrad in Abhängigkeit von der Anzahl der Umschlagspunkte oder Umschlagsbereiche 90 bestimmt.

So können die Betriebsdaten, wie beispielsweise Leistungswerte 94, bewertet werden und als bewertete Leistungswerte 96 befreit vom Einfluss durch Verschmutzung bestimmt werden.

## Patentansprüche

1. Verfahren zum Bestimmen von Betriebsdaten (62) einer Windenergieanlage (100), umfassend die Schritte:
- kontinuierliches oder periodisches Messen (66) von Betriebsdaten (62) zu Messzeitpunkten (64) in einem Messzeitraum (68),
- Detektieren (70) eines Verschmutzungsgrads (74) mindestens eines festgelegten Bereichs (40) einer Oberfläche mindestens eines Rotorblatts (108) der Windenergieanlage (100) jeweils in mehreren nacheinander folgenden Detektionszeitpunkten (72) im Messzeitraum (68) und
- Bewerten (76) der gemessenen Betriebsdaten (62) mit den detektierten Verschmutzungsgraden (74),
wobei die Detektion (70) des Verschmutzungsgrades (74) erfolgt, indem mindestens ein Infrarotbild (82) des festgelegten Bereichs (40) mit mindestens einer Wärmebildkamera (20) in einem Detektionszeitpunkt (72) aufgenommen (80) wird und
wobei der Messzeitraum (68) als Zeitraum festgelegt wird, der mehr als eine Woche, mehr als einen Monat oder mehr als sechs Monate umfasst.

2. Verfahren nach Anspruch 1, wobei die Bewertung (76) der Betriebsdaten (62) erfolgt, indem die Betriebsdaten (62) mit dem Verschmutzungsgrad (74) des Detektionszeitpunktes (72) bewertet werden, der zeitlich am nächsten zum Messzeitpunkt (64) der zu bewertenden Betriebsdaten (62) liegt.

3. Verfahren nach Anspruch 1 oder 2, wobei der Verschmutzungsgrad (74) durch Bestimmen einer Anzahl von Umschlagpunkten (90) oder Umschlagbereichen der Luftströmung im festgelegten Bereich (40) detektiert wird.

4. Verfahren nach einem der vorhergehenden Ansprüche, wobei die Wärmebildkamera (20) vor oder hinter der Windenergieanlage (100) zusammen mit der Windenergieanlage (100) auf einer Geraden, die im Wesentlichen parallel zur Hauptwindrichtung (10) ist, platziert wird oder mehrere Wärmebildkameras (20) vor oder hinter der Windenergieanlage (100) symmetrisch zur Geraden platziert werden.

5. Verfahren nach einem der vorhergehenden Ansprüche, wobei die mindestens eine Wärmebildkamera (20) unbeweglich platziert wird und zur Detektion (70) eines Verschmutzungsgrads (74) des festgelegten Bereichs (40) mehrere Bilder (82) in einem zeitlichen Abstand von weniger als einer Sekunde zueinander aufgenommen (80) werden, wenigstens eines der Bilder (82), das den mindestens einen festgelegten Bereich (40) zeigt, bestimmt wird, ein Detektionszeitpunkt (72) in Abhängigkeit des Zeitpunkts festgelegt wird, an dem das bestimmte Bild (82) aufgenommen (80) wurde, und der dem Detektionszeitpunkt (72) zugeordnete Verschmutzungsgrad (73) anhand des bestimmten Bilds (82) bestimmt wird, oder
die Vorrichtung (14) einen Sensor aufweist, der eine Sollposition des den festgelegten Bereich (40) umfassenden Rotorblatts (108) detektiert, um eine Aufnahme zur Detektion (70) des Verschmutzungsgrades (74) auszulösen.

6. Verfahren nach einem der vorhergehenden Ansprüche, wobei die Betriebsdaten (62) als Leistungsvermessungswerte (94) bei einer Leistungsvermessung, als Schallvermessungswerte bei einer Schallvermessung oder als Lastenvermessungswerte bei einer Lastenvermessung gemessen (60) werden.

7. Verfahren nach einem der vorhergehenden Ansprüche, wobei die Detektion (70) wiederholt mindestens einmal pro Stunde oder mindestens einmal alle zwei Stunden erfolgt, wobei die Wiederholung der Detektion (70) automatisch unterbrochen wird, wenn aufgrund des Sonnenstands sowie der Position der mindestens einen Wärmebildkamera (20) die Gefahr der Beschädigung eines Bildsensors der Wärmebildkamera (20) besteht, wobei ein Unterbrechungszeitraum insbesondere durch Hinterlegen der Kameraausrichtung und einer Sonnenstandstabelle für den Standort oder durch Auswerten der Signale eines Lichtsensors der Wärmebildkamera oder der Windenergieanlage erfolgt.

## Claims

1. Method for determining operating data (62) of a wind turbine (100), comprising the steps:
- continuously or periodically measuring (66) operating data (62) at measurement times (64) within a measurement period (68),
- detecting (70) a degree of contamination (74) of at least one specified area (40) of a surface of at least one rotor blade (108) of the wind turbine (100) at several successive detection time points (72) in the measurement period (68), and
- evaluating (76) the measured operating data (62) with the detected degrees of contamination (74),
wherein detecting (70) the degree of contamination (74) is carried out by capturing (80) at least one infrared image (82) of the specified area (40) with at least one thermal imaging camera (20) at a detection time point (72), and
wherein the measurement period (68) is defined as a period of time comprising more than one week, more than one month, or more than six months.

2. Method according to claim 1, wherein the evaluation (76) of the operating data (62) is carried out by evaluating the operating data (62) with the degree of contamination (74) at the detection time point (72) that is closest in time to the measurement time (64) of the operating data (62) to be evaluated.

3. Method according to claim 1 or 2, wherein the degree of contamination (74) is detected by determining a number of transition points (90) or transition areas of the air flow in the specified area (40).

4. Method according to one of the preceding claims, wherein the thermal imaging camera (20) is placed in front of or behind the wind turbine (100) together with the wind turbine (100) on a straight line that is essentially parallel to the main wind direction (10), or several thermal imaging cameras (20) are placed in front of or behind the wind turbine (100) symmetrically to the straight line.

5. Method according to one of the preceding claims, wherein the at least one thermal imaging camera (20) is placed immovably and, for the detection (70) of a degree of contamination (74) of the specified area (40), several images (82) are recorded (80) at intervals of less than one second from each other, at least one of the images (82) showing the at least one specified area (40) is determined, a detection time point (72) is determined as a function of the time at which the specific image (82) was captured (80), and the degree of contamination (73) associated with the detection time point (72) is determined on the basis of the determined image (82), or
the device (14) has a sensor that detects a target position of the rotor blade (108) comprising the specified area (40) to trigger an image capture for detecting (70) the degree of contamination (74).

6. Method according to one of the preceding claims, wherein the operating data (62) are measured (60) as power measurement values (94) during a power measurement, as sound measurement values during a sound measurement, or as load measurement values during a load measurement.

7. Method according to one of the preceding claims, wherein the detection (70) is repeated at least once per hour or at least once every two hours, wherein the repetition of the detection (70) is automatically interrupted if, due to the position of the sun and the position of the at least one thermal imaging camera (20), there is a risk of damage to an image sensor of the thermal imaging camera (20), wherein an interruption period is effected in particular by storing the camera alignment and a sun position table for the location or by evaluating the signals of a light sensor of the thermal imaging camera or the wind turbine.

## Revendications

1. Procédé destiné à déterminer des données de fonctionnement (62) d'une éolienne (100), comprenant les étapes :
- de mesure (66) continue ou périodique de données de fonctionnement (62) à des moments de mesure (64) dans une période de mesure (68),
- de détection (70) d'un degré d'encrassement (74) d'au moins une zone définie (40) d'une surface d'au moins une pale de rotor (108) de l'éolienne (100) respectivement à plusieurs moments de détection (72) successifs dans la période de mesure (68) et
- d'évaluation (76) des données de fonctionnement (62) mesurées avec les degrés d'encrassement (74) détectés,
dans lequel la détection (70) du degré d'encrassement (74) est effectuée en enregistrant (80) au moins une image infrarouge (82) de la zone définie (40) avec au moins une caméra thermique (20) à un moment de détection (72) et
dans lequel la période de mesure (68) est définie comme étant une période qui comprend plus d'une semaine, plus d'un mois ou plus de six mois.

2. Procédé selon la revendication 1, dans lequel l'évaluation (76) des données de fonctionnement (62) est effectuée en évaluant les données de fonctionnement (62) avec le degré d'encrassement (74) du moment de détection (72), qui est temporellement le plus proche du moment de mesure (64) des données de fonctionnement (62) à évaluer.

3. Procédé selon la revendication 1 ou 2, dans lequel le degré d'encrassement (74) est détecté en déterminant un nombre de points de transition (90) ou de zones de transition du flux d'air dans la zone définie (40).

4. Procédé selon l'une quelconque des revendications précédentes, dans lequel la caméra thermique (20) est placée devant ou derrière l'éolienne (100) conjointement avec l'éolienne (100) sur une ligne, qui est sensiblement parallèle à la direction principale du vent (10), ou plusieurs caméras thermiques (20) sont placées devant ou derrière l'éolienne (100) de manière symétrique par rapport à la ligne.

5. Procédé selon l'une quelconque des revendications précédentes, dans lequel l'au moins une caméra thermique (20) est placée de manière immobile et, pour la détection (70) d'un degré d'encrassement (74) de la zone définie (40), plusieurs images (82) sont enregistrées (80) à un intervalle de temps inférieur à une seconde les unes par rapport aux autres, au moins une des images (82), qui montre l'au moins une zone définie (40), est déterminée, un moment de détection (72) est défini en fonction du moment auquel l'image (82) déterminée a été enregistrée (80), et le degré d'encrassement (73) associé au moment de détection (72) est déterminé à l'aide de l'image (82) déterminée, ou
le dispositif (14) présente un capteur, qui détecte une position de consigne de la pale de rotor (108) comprenant la zone définie (40) pour déclencher un enregistrement pour la détection (70) du degré d'encrassement (74).

6. Procédé selon l'une quelconque des revendications précédentes, dans lequel les données de fonctionnement (62) sont mesurées (60) en tant que valeurs de mesure de performance (94) lors d'une mesure de performance, en tant que valeurs de mesure acoustique lors d'une mesure acoustique ou en tant que valeurs de mesure de charge lors d'une mesure de charge.

7. Procédé selon l'une quelconque des revendications précédentes, dans lequel la détection (70) est répétée au moins une fois par heure ou au moins une fois toutes les deux heures, dans lequel la répétition de la détection (70) est automatiquement interrompue lorsque, en raison de la position du soleil et de la position de l'au moins une caméra thermique (20), il existe un risque d'endommagement d'un capteur d'image de la caméra thermique (20), dans lequel une période d'interruption a lieu en particulier par la sauvegarde de l'orientation de caméra et d'un tableau de position du soleil pour le site ou par l'analyse des signaux d'un capteur de lumière de la caméra thermique ou de l'éolienne.
